# FASCICULE DE BREVET EUROPEEN

(11) **EP 2 379 466 B1**
(45) Date de publication et mention de la délivrance du brevet: **03.04.2019**
(21) Numéro de dépôt: 09804276.5
(22) Date de dépôt: 18.12.2009
(51) Int. Cl.: C04B 7/32, C04B 28/02, C04B 28/06

(54) **LIANT HYDRAULIQUE A BASE DE CLINKER SULFOALUMINEUX ET DE CLINKER PORTLAND**
HYDRAULISCHES BINDEMITTEL AUF BASIS VON SULFOALUMINATKLINKER UND PORTLANDKLINKER
HYDRAULIC BINDER BASED ON SULFOALUMINOUS CLINKER AND ON PORTLAND CLINKER

(30) Priorité: 19.12.2008 FR 0807182; 23.01.2009 FR 0900291
(43) Date de publication de la demande: 26.10.2011
(73) Titulaire: Holcim Technology Ltd, 8645 Jona (CH)
(72) Inventeur: WALENTA, Günther, F-69740 Genas (FR); COMPARET, Cédric, F-38460 Optevoz (FR); MORIN, Vincent, F-69003 Lyon (FR); GARTNER, Ellis, F-69003 Lyon (FR)
(74) Mandataire: Regimbeau
(86) Numéro de dépôt international: PCT/FR2009/001456
(87) Numéro de publication internationale: WO 2010/070214

(56) Documents cités:
- FR-A- 2 873 366
- GLASSER F P ET AL: "High-performance cement matrices based on calcium sulfoaluminate-belite compositions" CEMENT AND CONCRETE RESEARCH, PERGAMON PRESS, ELMSFORD, NY, US, vol. 31, no. 12, 1 décembre 2001 (2001-12-01), pages 1881-1886, XP002320779 ISSN: 0008-8846
- MAJLING J ET AL: "GENERALIZED BOGUE COMPUTATIONS TO FORECAST THE MINERALOGICAL COMPOSITION OF SULFOALUMINATE CEMENTS BASED ON FLY ASHES" ADVANCES IN CEMENT RESEARCH, LONDON, GB, vol. 11, no. 1, 1 janvier 1999 (1999-01-01), pages 27-34, XP008044126 ISSN: 0951-7197
- MEHTA P K: "INVESTIGATIONS ON ENERGY-SAVING CEMENTS" WORLD CEMENT TECHNOLOGY, CEMENT AND CONCRETE ASSOCIATION, LONDON, GB, 1 mai 1980 (1980-05-01), pages 166-177, XP008044077 ISSN: 0308-8855
- BERETKA J ET AL: "Influence of C4A3S~ content and W/S ratio on the performance of calcium sulfoaluminate-based cements" CEMENT AND CONCRETE RESEARCH, PERGAMON PRESS, ELMSFORD, NY, US, vol. 26, no. 11, 1 novembre 1996 (1996-11-01), pages 1673-1681, XP002320780 ISSN: 0008-8846
- ARJUNAN P ET AL: "Sulfoaluminate-belite cement from low-calcium fly ash and sulfur-rich and other industrial by-products" CEMENT AND CONCRETE RESEARCH, PERGAMON PRESS, ELMSFORD, NY, US, vol. 29, no. 8, 1 janvier 1999 (1999-01-01), pages 1305-1311, XP002320781 ISSN: 0008-8846

## Description

La présente invention se rapporte à une composition comprenant au moins un clinker sulfoalumineux et un clinker Portland, à son procédé de fabrication, et à son utilisation pour la préparation de liants hydrauliques.

La plupart des bétons modernes sont faits avec des ciments hydrauliques obtenus en général à partir de clinkers. La fabrication du clinker Portland est réalisée en chauffant un mélange fin et intime comprenant par exemple du calcaire, de l'argile, de la silice et du minerai de fer, à une température généralement supérieure à 1350°C dans un four rotatif. Après calcination du mélange, le clinker se présente sous forme de nodules durs qui, après refroidissement, sont broyés avec des sulfates de calcium et d'autres additions minérales pour former le ciment Portland. Une teneur très élevée en calcaire est nécessaire dans le mélange des matières premières introduites dans le four, afin d'obtenir un clinker ayant pour phase minérale principale, l'alite. L'alite est une forme impure de trisilicate de calcium, Ca₃SiO₅, que l'on écrit sous la forme conventionnelle C₃S. Une haute teneur en alite, généralement supérieure à 50%, pourcentage en masse, est indispensable dans la composition minéralogique des ciments modernes, car c'est elle qui permet un développement rapide de la résistance mécanique juste après la prise, et d'acquérir une résistance mécanique suffisante à 28 jours et au-delà, afin de satisfaire aux exigences, en ce domaine, de la plupart des normes ciment. Pour la suite de l'exposé de l'invention, les notations abrégées suivantes seront utilisées, sauf indication contraire explicite, pour désigner les composants minéralogiques du ciment :
- C représente CaO (chaux),
- A représente Al₂O₃ (alumine),
- F représente Fe₂O₃,
- S représente SiO₂ (silice),
- $ représente SO₃,
- H représente H₂O (eau).

Or la fabrication du clinker Portland rejette dans l'atmosphère du dioxyde de carbone. En effet l'industrie du ciment est responsable d'environ 5% des émissions industrielles de CO₂. Ces émissions de CO₂ lors de la fabrication du clinker Portland peuvent être réduits d'environ 10% si l'on élimine presque totalement l'alite. Ceci peut être fait si l'on réduit de 10% la quantité de calcaire introduite dans le four; la quantité de CO₂ liée à la décarbonatation du calcaire lors de la calcination est réduite, ainsi que la quantité de combustible nécessaire pour fournir l'énergie pour décarbonater le calcaire. Ceci s'accompagne d'une réduction de la température du four ce qui permet d'économiser de l'énergie, et donc des coûts lors de la fabrication du clinker.

Cependant la réduction de l'alite lors de la fabrication des clinkers Portland ne permet pas d'obtenir des clinkers produisant des ciments dont les résistances mécaniques sont satisfaisantes. En effet les clinkers à faible teneur en alite produisent des ciments dont les résistances mécaniques à court terme ne satisfont pas aux exigences normatives, et aux performances requises dans les applications des bétons modernes actuels.

Dans le but de développer des ciments commercialement utilisables dont la fabrication est associée avec de faibles émissions industrielles de CO₂, il est devenu nécessaire de trouver un autre moyen pour fabriquer un clinker à faible émission de CO₂.

Aussi le problème que se propose de résoudre l'invention est de fournir un nouveau clinker.

De manière inattendue, les inventeurs ont mis en évidence qu'il est possible de mélanger des clinkers Portland avec un clinker sans alite, éventuellement avec une très faible teneur en alite, tout en conservant et / ou en augmentant les résistances mécaniques, notamment à court terme.

Dans ce but la présente invention propose une composition comprenant au moins en % exprimé en masse par rapport à la masse totale de composition
- de 10 à 85 % d'un clinker Portland ou ciment Portland; et
- de 90 à 15 % d'un clinker Belite-Calcium-Sulphoalumineux-Ferrite (BCSAF) comprenant au moins en % exprimé en masse par rapport à la masse totale de clinker BCSAF
   ▪ de 5 à 30 %, de phase aluminoferrite calcique d'une composition correspondant à la formule générale C₂A_{X}F_{(1-X)}, avec X compris de 0,2 à 0,8 ;
   ▪ de 10 à 35 %, de phase sulfoaluminate de calcium « ye'elimite » C₄A₃$,
   ▪ de 40 à 75% de bélite (C₂S),
   ▪ de 0,01 à 10% d'une ou plusieurs phases mineures choisies parmi les sulfates de calcium, les sulfates alcalins, la perovskite, la géhlénite, la chaux libre et la périclase, et/ou une phase vitreuse,
      et dont le total des pourcentages de ces phases est supérieur ou égal à 97%.

L'invention a aussi pour objet un ciment comprenant au moins
- une composition telle que décrite ci-dessus; et
- de 1 à 40 % de sulfate de calcium, % en masse par rapport à la masse totale de ciment.

L'invention concerne aussi un béton comprenant au moins un ciment décrit ci-dessus.

Enfin l'invention a également pour objet un procédé de préparation d'un béton selon l'invention comprenant une étape de mélange d'un ciment selon l'invention avec des granulats, de l'eau, éventuellement des additifs, et éventuellement des additions minérales.

L'invention offre au moins un des avantages déterminants décrit ci-après.

Avantageusement, les liants hydrauliques selon l'invention présentent des résistances mécaniques élevée à court terme, en particulier après 24 heures.

L'invention offre comme autre avantage que les compositions selon l'invention peuvent être fabriquées avec des fours rotatifs conventionnels et / ou des fours différents.

Enfin l'invention a pour avantage de pouvoir être mise en oeuvre dans toutes industries, notamment l'industrie du bâtiment, l'industrie cimentière, et dans l'ensemble des marchés de la construction (bâtiment, génie civil ou usine de préfabrication).

D'autres avantages et caractéristiques de l'invention apparaîtront clairement à la lecture de la description et des exemples donnés à titre purement illustratifs et non limitatifs qui vont suivre.

Par l'expression « liant hydraulique », on entend selon la présente invention tout composé ayant la propriété de s'hydrater en présence d'eau et dont l'hydratation permet d'obtenir un solide ayant des caractéristiques mécaniques. Le liant hydraulique selon l'invention peut en particulier être un ciment.

Par le terme « béton », on entend un mélange de liants hydrauliques, de granulats, d'eau, éventuellement d'additifs, et éventuellement d'additions minérales comme par exemple le béton hautes performances, le béton très hautes performances, le béton autoplaçant, le béton autonivelant, le béton autocompactant, le béton fibré, le béton prêt à l'emploi ou le béton coloré. Par le terme « béton », on entend également les bétons ayant subi une opération de finition telle que le béton bouchardé, le béton désactivé ou lavé, ou le béton poli. On entend également selon cette définition le béton précontraint. Le terme « béton » comprend les mortiers, dans ce cas précis le béton comprend un mélange de liant hydraulique, de sable, d'eau et éventuellement d'additifs et éventuellement d'additions minérales. Le terme « béton » selon l'invention désigne indistinctement le béton frais ou le béton durci.

Par le terme « granulats », on entend selon l'invention des graviers, des gravillons et / ou du sable des granulats légers et / ou des granulats artificiels.

Par l'expression « additions minérales», on entend selon l'invention les laitiers (tels que définis dans la norme « Ciment » NF EN 197-1 paragraphe 5.2.2), les laitiers d'aciérie, les matériaux pouzzolaniques (tels que définis dans la norme « Ciment » NF EN 197-1 paragraphe 5.2.3), les cendres volantes (telles que définies dans la norme « Ciment » NF EN 197-1 paragraphe 5.2.4), les schistes calcinés (tels que définis dans la norme « Ciment » NF EN 197-1 paragraphe 5.2.5), les calcaires (tels que définis dans la norme « Ciment » NF EN 197-1 paragraphe 5.2.6) ou encore les fumées de silices (telles que définies dans la norme « Ciment » NF EN 197-1 paragraphe 5.2.7) ou leurs mélanges.

Par l'expression « ciment Portland », on entend selon l'invention un ciment de type CEM I, CEM II, CEM III, CEM IV ou CEM V selon la la norme « Ciment » NF EN 197-1.

Par l'expression « clinker Portland », on entend selon l'invention un clinker tel que défini dans la norme « Ciment » NF EN 197-1.

Par le terme « feldspaths », on entend selon l'invention un minéral à base de silicate double d'aluminium, de potassium, de sodium ou de calcium. Les feldspaths sont de la famille des tectosilicates. Il existe de nombreux feldspaths dont les principaux sont l'orthose, potassique, l'albite, sodique, et l'anorthite, calcique. Le mélange de ces deux derniers donne la série des plagioclases.

Par le terme « clinker », on entend selon l'invention le produit obtenu après cuisson (la clinkerisation) d'un mélange (le cru) composé, entre autres par exemple de calcaire et par exemple d'argile.

Par l'expression « ciment BCSAF », on entend selon l'invention un ciment comprenant au moins un clinker BCSAF et au moins une source de sulfate de calcium.

Par l'expression « clinker BCASF », on entend selon l'invention un clinker qui peut être obtenu selon le procédé décrit dans la demande WO 2006/018569 ou encore un clinker comprenant au moins en % exprimé en masse par rapport à la masse totale de clinker BCSAF
▪ de 5 à 30 %, de phase aluminoferrite calcique d'une composition correspondant à la formule générale C₂A_{X}F_{(1-X)}, avec X compris de 0,2 à 0,8 ;
▪ de 10 à 35 %, de phase sulfoaluminate de calcium « ye'elimite » C₄A₃$,
▪ de 40 à 75 % de bélite (C₂S),
▪ de 0,01 à 10 % d'une ou plusieurs phases mineures choisies parmi les sulfates de calcium, les sulfates alcalins, la perovskite, la géhlénite, la chaux libre et la périclase, et/ou une phase vitreuse,
et dont le total des pourcentages de ces phases est supérieur ou égal à 97%.

Par le terme « phase », on entend selon l'invention une phase minéralogique.

Par le terme « élément », on entend selon l'invention un élément chimique selon le tableau périodique des éléments.

Par les termes suivants, on entend selon la présente invention :
- C₃S: Silicate tricalcique impur (Ca₃SiO₅): (Alite) 3(CaO)•(SiO₂)
- C₂S: Silicate bicalcique impur (Ca₂SiO₄) : (Belite) 2(CaO)•(SiO₂)
- C₃A: Aluminate tricalcique (Ca₃Al₂O₆) : (Aluminate) 3(CaO)•(Al₂O₃)
- C₄AF: Ferro-aluminate tétracalcique (Ca₄Al₂Fe₂O₁₀) : (Ferrite ou aluminoferrite ou brownmillerite) 4(CaO)•(Al₂O₃)•(Fe₂O₃), ou plus généralement un composé de formule générale 2(CaO)•x(Al₂O₃)•(1-x)(Fe₂O₃) avec X de 0,2 à 0,8
- C₄A₃$, : sulfoaluminate de calcium « ye'elimite » 4(CaO)•3(Al₂O₃)•(SO₃)
- Calcaire (limestone) : CaCO₃
- Gypse : CaSO₄•2(H₂O) ;
- Sulfate de calcium semihydrate : CaSO4•0.5H₂O ;
- Sulfate de calcium anhydre : CaSO4;
- Périclase : MgO ;
- Sable, silice : SiO₂.

Par le terme «argile», on entend selon la présente invention une roche sédimentaire, composée pour une large part de minéraux spécifiques, silicates en général d'aluminium plus ou moins hydratés, qui présentent une structure feuilletée (phyllosilicates), ou bien une structure fibreuse (sépiolite et palygorskite).

Par le terme « prise », on entend selon la présente invention le passage à l'état solide par réaction chimique d'hydratation du liant hydraulique. La prise est généralement suivi par la période de durcissement.

Par le terme « durcissement», on entend selon la présente invention l'acquisition des propriétés mécaniques d'un liant hydraulique, après la fin de la prise.

Par l'expression « éléments pour le domaine de la construction », on entend selon la présente invention tout élément constitutif d'une construction comme par exemple un sol, une chape, une fondation, un mur, une cloison, un plafond, une poutre, un plan de travail, un pilier, une pile de pont, un parpaing, un tuyau, un poteau, une corniche, un élément de voirie (par exemple une bordure de trottoir), une tuile, un élément d'assainissement.

Tout d'abord la présente invention a pour objet une composition comprenant au moins en % exprimé en masse par rapport à la masse totale de composition
- de 10 à 85 % d'un clinker Portland ou ciment Portland; et
- de 90 à 15 % d'un clinker Belite-Calcium-Sulphoalumineux-Ferrite (BCSAF) comprenant au moins en % exprimé en masse par rapport à la masse totale de clinker BCSAF
   ▪ de 5 à 30 %, de phase aluminoferrite calcique d'une composition correspondant à la formule générale C₂A_{X}F_{(1-X)}, avec X compris de 0,2 à 0,8 ;
   ▪ de 10 à 35%, de phase sulfoaluminate de calcium « ye'elimite » C₄A₃$,
   ▪ de 40 à 75% de bélite (C₂S),
   ▪ de 0,01 à 10% d'une ou plusieurs phases mineures choisies parmi les sulfates de calcium, les sulfates alcalins, la perovskite, la géhlénite, la chaux libre et la périclase, et/ou une phase vitreuse,
   et dont le total des pourcentages de ces phases est supérieur ou égal à 97%.

La bélite est une phase minéralogique bien connue de l'homme du métier, qui à l'état pur possède la composition Ca₂SiO₄ mais qui peut aussi contenir des impuretés.

La phase « ye'elimite » est une phase minéralogique qui à l'état pur possède la composition Ca₄Al₆SO₁₆ mais qui peut aussi contenir des impuretés.

La phase aluminoferrite est une phase minéralogique qui à l'état pur possède la formule C₂A_{X}F_{(1-X)}, avec X compris de 0,2 à 0,8 mais qui peut aussi contenir des impuretés.

Par impureté, on entend n'importe quel élément de la classification périodique des éléments.

Avantageusement, le total des pourcentages desdites phases du clinker BCSAF est supérieur ou égal à 97 %, de préférence supérieur ou égal à 98 %, plus préférentiellement supérieur ou égal à 99 %, encore plus préférentiellement égal à 100%.

De préférence, les phases minéralogiques du clinker BCSAF de la composition selon l'invention comprennent en outre un ou plusieurs éléments secondaires choisis parmi le magnésium, le sodium, le potassium, le bore, le phosphore, le zinc, le manganèse, le titane, le fluor, le chlore.

De préférence le clinker Portland ou le ciment Portland convenant selon l'invention comprend un clinker ou ciment Portland du type CEM I, CEM II, CEM III, CEM IV ou CEM V.

De préférence, la composition selon l'invention comprend un clinker Belite-Calcium-Sulphoalumineux-Ferrite (BCSAF) comprenant au moins en % exprimé en masse par rapport à la masse totale de clinker BCSAF dans la composition
- de 10 à 25 %, de phase aluminoferrite calcique d'une composition correspondant à la formule générale C₂A_{X}F_{(1-X)}, avec X compris de 0,2 à 0,8 ;
- de 15 à 30%, de phase sulfoaluminate de calcium « ye'elimite » C₄A₃$,
- de 45 à 70 % de bélite (C₂S),
- de 0,01 à 10% d'une ou plusieurs phases mineures choisies parmi les sulfates de calcium, les sulfates alcalins, la perovskite, la géhlénite, la chaux libre et la périclase, et/ou une phase vitreuse,
et dont le total des pourcentages de ces phases est supérieur ou égal à 97%.

Plus préférenciellement, la composition selon l'invention comprend un clinker Belite-Calcium-Sulphoalumineux-Ferrite (BCSAF) comprenant, en % exprimé en masse par rapport à la masse totale de clinker BCSAF dans la composition, au moins
• de 15 à 25 %, de phase aluminoferrite calcique d'une composition correspondant à la formule générale C₂A_{X}F_{(1-X)}, avec X compris de 0,2 à 0,8 ;
• de 20 à 30 %, de phase sulfoaluminate de calcium « ye'elimite » C₄A₃$,
• de 45 à 60 % de bélite (C₂S),
• de 0,01 à 10% d'une ou plusieurs phases mineures choisies parmi les sulfates de calcium, les sulfates alcalins, la perovskite, la géhlénite, la chaux libre et la périclase, et/ou une phase vitreuse,
et dont le total des pourcentages de ces phases est supérieur ou égal à 97%
• et en ce que les phases minéralogiques du clinker BCSAF comprennent un ou plusieurs éléments secondaires choisis parmi le magnésium, le sodium, le potassium, le bore, le phosphore, le zinc, le manganèse, le titane, le fluor, le chlore.

Les phases minéralogiques du clinker BCSAF de la composition selon l'invention peuvent comprendre comme éléments majeurs le calcium, l'aluminium, la silice, le fer, l'oxygène et le soufre.

Le clinker BCSAF de la composition selon l'invention peut comprendre au moins les oxydes principaux suivants présents dans les proportions relatives, % exprimées en masse par rapport à la masse totale de clinker BCSAF:
CaO : 45 à 61 %
Al2O3 : 8 à 22 %
SiO₂ : 15 à 25 %
Fe₂O₃: 3 à 15 %
SO₃ : 2 à 10 %.

Les phases minéralogiques du clinker BCSAF de la composition selon l'invention peuvent comprendre de un à plusieurs éléments secondaires, en % exprimé en masse par rapport à la masse totale de clinker BCSAF dans la composition, choisis parmi le magnésium, le sodium, le potassium, le bore, le phosphore, le zinc, le manganèse, le titane, le fluore, le chlore, présents préférentiellement dans les quantités suivantes:
- de 0 à 5% de magnésium exprimé en oxyde de magnésium,
- de 0 à 5% de sodium exprimé en oxyde de sodium,
- de 0 à 5% de potassium exprimé en oxyde de potassium,
- de 0 à 3% de bore exprimé en oxyde de bore,
- de 0 à 7% de phosphore exprimé en anhydride phosphorique,
- de 0 à 5% de zinc, manganèse, titane ou leur mélange, exprimé en oxydes de ces éléments,
- de 0 à 3% de fluorure, de chlorure, ou leur mélange, exprimé en fluorure de calcium et chlorure de calcium,
   la teneur totale desdits éléments secondaires étant inférieure ou égale à 15%.

Les phases minéralogiques du clinker BCSAF de la composition selon l'invention peuvent comprendre, en % exprimé en masse par rapport à la masse totale de clinker BCSAF dans la composition, de manière préférentielle les éléments secondaires suivants :
- de 1 à 4% de magnésium exprimé en oxyde de magnésium,
- de 0,1 à 2% de sodium exprimé en oxyde de sodium,
- de 0,1 à 2% de potassium exprimé en oxyde de potassium,
- de 0 à 2% de bore exprimé en oxyde de bore,
- de 0 à 4% de phosphore exprimé en anhydride phosphorique,
- de 0 à 3 % de zinc, manganèse, titane ou leur mélange, exprimé en oxydes de ces éléments,
- de 0 à 1% de fluorure, de chlorure, ou leur mélange, exprimé en fluorure de calcium et chlorure de calcium.

Les phases minéralogiques du clinker BCSAF de la composition selon l'invention peuvent comprendre, en % exprimé en masse par rapport à la masse totale de clinker BCSAF dans la composition, de manière préférentielle les éléments secondaires suivants :
- de 0,2 à 1,5 % de sodium exprimé en oxyde de sodium,
- de 0,2 à 1,5 % de potassium exprimé en oxyde de potassium,
- de 0,2 à 2% de bore exprimé en oxyde de bore,
- de 0 à 1% de fluorure plus chlorure, ou leur mélange, exprimé en fluorure de calcium et chlorure de calcium.

De manière préférentielle, les phases minéralogiques du clinker BCSAF de la composition selon l'invention peuvent comprendre, en % exprimé en masse par rapport à la masse totale de clinker BCSAF dans la composition, les éléments secondaires suivants :
- de 0,2 à 2% de bore exprimé en oxyde de bore ;
- de 0,1 à 2% de potassium exprimé en oxyde de potassium.

D'une autre manière préférentielle, les phases minéralogiques du clinker BCSAF de la composition selon l'invention peuvent comprendre, en % exprimé en masse par rapport à la masse totale de clinker BCSAF dans la composition, les éléments secondaires suivants :
- de 0,2 à 2% de bore exprimé en oxyde de bore ;
- de 0,1 à 2% de sodium exprimé en oxyde de sodium.

D'une autre manière préférentielle, les phases minéralogiques du clinker BCSAF de la composition selon l'invention peuvent comprendre, en % exprimé en masse par rapport à la masse totale de clinker BCSAF dans la composition, l'élément secondaire suivant :
- de 0,2 à 2% de bore exprimé en oxyde de bore.

D'une autre manière préférentielle, les phases minéralogiques du clinker BCSAF de la composition selon l'invention peuvent comprendre, en % exprimé en masse par rapport à la masse totale de clinker BCSAF dans la composition, les éléments secondaires suivants :
- de 0,2 à 2% de potassium exprimé en oxyde de potassium;
- de 0,5 à 4% de phosphore exprimé en oxyde de phosphore (P₂O₅).

D'une autre manière préférentielle, les phases minéralogiques du clinker BCSAF de la composition selon l'invention peuvent comprendre, en % exprimé en masse par rapport à la masse totale de clinker BCSAF dans la composition, les éléments secondaires suivants :
- de 0,2 à 2% de potassium exprimé en oxyde de potassium;
- de 0,5 à 4% de phosphore exprimé en oxyde de phosphore (P₂O₅) ;
- moins de 0,1% de bore exprimé en oxyde de bore ;

Selon une variante de l'invention, le clinker BCSAF selon l'invention ne comprend pas de borax, ou de bore ou de composé comprenant du bore.

De préférence la composition selon l'invention comprend, le sodium et le potassium en tant qu'éléments secondaires.

De préférence le clinker BCSAF de la composition selon l'invention ne comprend pas de phase minéralogique C₃S.

Un autre objet de l'invention est de proposer un procédé de fabrication d'une composition selon l'invention comprenant une étape de mise en contact d'un clinker Portland ou d'un ciment Portland et d'un clinker BCSAF. Ce procédé de fabrication d'une composition selon l'invention peut comprendre événtuellement une étape de broyage et/ou d'homogénéisation.

Le clinker Belite-Calcium-Sulphoalumineux-Ferrite (BCSAF) de la composition selon l'invention peut être obtenu selon le procédé décrit dans la demande WO 2006/018569 ou encore le clinker BCSAF peut être le même que celui décrit dans la demande WO 2006/018569.

Le clinker BCSAF de la composition selon l'invention peut être réalisé selon d'autres procédés et notamment de la manière suivante :
a) préparer un cru comprenant une matière première ou un mélange de matières premières capable par clinkérisation de fournir les phases C₂A_{X}F_{(1-X)}, avec X compris entre 0,2 et 0,8, phase C₄A₃$, et phase C₂S dans les proportions requises;
b) ajouter et mélanger au cru obtenu à l'étape a) au moins un additif d'apport d'élément secondaire choisi parmi le magnésium, le sodium, le potassium, le bore, le phosphore, le zinc, le manganèse, le titane, le fluor, le chlore, ou leurs mélanges, en une quantité calculée pour que, après clinkérisation, la quantité correspondante d'éléments secondaires, exprimée comme indiquée ci-dessus, soit inférieure ou égale à 20 % en masse par rapport à la masse totale du clinker BCSAF; et
c) calciner le mélange obtenu à l'étape b) à une température comprise de 1150°C à 1400°C, de préférence de 1200°C à 1325°C, pendant au minimum 15 minutes en atmosphère suffisamment oxydante pour éviter la réduction du sulfate de calcium en dioxyde de soufre.

De préférence, les matière premières pouvant convenir pour réaliser l'étape a) sont :
- une source de silice comme par exemple un sable, une argile, une marne, les cendres volantes, les cendres de combustion du charbon, une pouzzolane, une fumée de silice ; la source de silice peut provenir de carrières ou résulter d'un procédé industriel ;
- une source de calcium comme par exemple le calcaire, la marne, les cendres volantes, les cendres de combustion du charbon, les pouzzolanes, les résidus de calcination des ordures ménagères ; la source de calcium peut provenir de carrières ou résulter d'un procédé industriel ;
- une source d'alumine comme par exemple une argile, une marne, les cendres volantes, les cendres de combustion du charbon, une pouzzolane, une bauxite, une boue rouge d'alumine notamment une boue d'alumine provenant de déchets industriels au cours de l'extraction de l'alumine, les latérites, les anorthosites, les albites, les feldspaths ; la source d'alumine peut provenir de carrières ou résulter d'un procédé industriel ;
- une source de fer comme par exemple l'oxyde de fer, les latérites, les laitiers d'acieries, le minerai de fer ; la source de fer peut provenir de carrières ou résulter d'un procédé industriel ;
- une source de sulfate de calcium comme par exemple du gypse, du sulfate de calcium semihydraté (α ou β), ou encore du sulfate de calcium anhydre ; les sources de sulfate de calcium convenant selon l'invention peuvent provenir de carrière, ou résultant d'un procédé industriel.

La préparation du cru à l'étape a) peut être réalisée par mélange des matières premières. Les matières premières peuvent être mélangées à l'étape a) par mise en contact, comprenant événtuellement une étape de broyage et/ou d'homogénéisation. De préférence, les matières premières de l'étape a) sont événtuellement séchées avant l'étape a) ou encore événtuellement calcinées avant l'étape a).

Les matières premières peuvent être ajoutées séquentiellement, soit dans l'entrée principale du four, et/ou soit dans d'autres entrées du four.

De plus les résidus de combustion peuvent aussi être intégrés dans le four

Les matière premières pouvant convenir pour réaliser l'étape b) sont :
- une source de bore comme par exemple le borax, l'acide borique, le colemanite ou tout autres composé contenant du bore; la source de bore peut provenir de carrières ou résulter d'un procédé industriel ;
- une source de magnésium comme par exemple un sel de magnésium ;
- une source de sodium comme par exemple un sel de sodium ;
- une source de potassium comme par exemple un sel de potassium ;
- une source de phosphore comme par exemple un sel de phosphore ;
- une source de zinc comme par exemple l'oxyde de zinc ;
- une source de manganèse comme par exemple l'oxyde de manganèse ;
- une source de titane comme par exemple l'oxyde de titane ;
- une source de fluor comme par exemple les sels de fluor ;
- une source de chlore comme par exemple les sels de chlore ;
   ou leurs mélanges.

Les matières premières pouvant convenir pour réaliser l'étape b) sont sous forme soit de poudre, soit de semi-solide, soit de liquide, ou soit de solide.

L'étape c) est une étape de calcination, ce qui signifie au sens de l'invention une étape de cuisson. Par calcination, on entend au sens de l'invention la réaction entre les éléments chimique de l'étape b) qui conduit à la formation des phases minéralogiques du clinker BCSAF. Cette étape peut se réaliser dans un four de cimenterie conventionnel (par exemple un four rotatif) ou dans un autre type de four (par exemple un four à passage).

De préférence, la calcination a lieu pendant au minimum 20 minutes, plus préférentiellement pendant au minimum 30 minutes, encore plus préférentiellement pendant au minimum 45 minutes.

Par atmosphère suffisamment oxydante, on entend par exemple l'air atmosphérique, mais d'autres atmosphères suffisamment oxydante peuvent convenir.

L'invention a également pour objet un ciment comprenant au moins
- une composition selon l'invention et décrit plus haut; et
- de 1 à 40 % de sulfate de calcium, % en masse par rapport à la masse totale de ciment.

De préférence le ciment selon l'invention comprend de 5 à 30 %, plus préférentiellement de 5 à 15 % de sulfate de calcium, encore plus préférentiellement de 3 à 10 % de sulfate de calcium,% en masse par rapport à la masse totale de ciment.

Le sulfate de calcium convenant selon l'invention est de préférence du gypse, du sulfate de calcium semihydraté (α ou β), ou encore du sulfate de calcium anhydre. Les sulfates de calcium convenant selon l'invention peuvent provenir de carrière, ou résultant d'un procédé industriel.

Le ciment selon l'invention peut être obtenu par co-broyage de la composition selon l'invention avec la quantité adéquate de gypse ou d'autres formes de sulfate de calcium déterminées par essais ou calcul.

Selon une variante de l'invention, des additions minérales peuvent être ajoutées dans le ciment selon l'invention. Le ciment selon l'invention peut comprendre en outre de 5 à 70 % d'additions minérales, plus préférentiellement de 10 à 60%, encore plus préférentiellement de 10 à 50%, % en masse par rapport à la masse totale de ciment. L'ajout d'additions minérales peut se faire par homogénéisation ou par co-broyage.

Selon une variante de l'invention, le ciment selon l'invention peut être obtenu par co-broyage de la composition selon l'invention avec la quantité adéquate de gypse ou d'autres formes de sulfate de calcium déterminées par essais ou calcul et avec la quantité adéquate d'additions minérales.

De préférence, le ciment selon l'invention comprend de 10 à 70 % d'additions minérales.

Selon un mode préférentiel, le ciment selon l'invention peut comprendre au moins des additions minérales choisies parmi les laitiers (tels que définis dans la norme « Ciment » NF EN 197-1 paragraphe 5.2.2), les laitiers d'aciérie, les matériaux pouzzolaniques (tels que définis dans la norme « Ciment » NF EN 197-1 paragraphe 5.2.3), les cendres volantes (telles que définies dans la norme « Ciment » NF EN 197-1 paragraphe 5.2.4) ou les calcaires (tels que définis dans la norme « Ciment » NF EN 197-1 paragraphe 5.2.6), ou leurs mélanges.

L'invention a également pour objet un béton comprenant au moins un ciment selon l'invention.

L'invention a également pour objet un procédé de préparation d'un béton selon l'invention comprenant une étape de mélange d'un ciment selon l'invention avec des granulats, de l'eau, éventuellement des additifs, et éventuellement des additions minérales.

L'invention a également pour objet des éléments pour le domaine de la construction réalisés en utilisant le béton selon l'invention ou le ciment selon l'invention.

Les exemples suivants illustrent l'invention sans en limiter la portée.

### EXEMPLES

### Matériaux :

- ciment Portland (nommé ci-après OPC) ;
- clinker BCSAF obtenus à partir de calcaire, d'argile kaolinite, de sulfate de calcium, d'oxyde de fer dont les compositions chimiques sont indiquées dans le tableau I ci-dessous et exprimée en % en masse par rapport à la masse totale :

**Tableau I**

| Composition en | Calcaire | Argile kaolinite | Bauxite | Anhydrite (sulfate de calcium anhydre) | Oxyde de fer |
|---|---|---|---|---|---|
| SiO2 tot. | 0.12 | 47.76 | 6.88 | 0.36 | 1.89 |
| Al2O3 | 0.14 | 35.36 | 85.11 | 0.18 | 0.00 |
| Fe2O3 | 0.09 | 1.34 | 1.85 | 0.12 | 95.30 |
| CaO | 55.34 | 0.73 | 0.46 | 40.80 | 0.00 |
| MgO | 0.19 | 0.27 | 0.18 | 0.00 | 0.03 |
| SO3 | 0.03 | 0.05 | 0.00 | 56.84 | 0.00 |
| Perte au feu | 44.06 | 12.04 | 0.46 | 1.70 | 2.00 |
| P2O5 | 0.00 | 0.00 | 0.01 | 0.00 | 0.06 |
| TiO2 | 0.00 | 0.05 | 4.13 | 0.00 | 0.05 |
| Mn2O3 | 0.00 | 0.00 | 0.00 | 0.00 | 0.67 |
| K2O tot. | 0.02 | 2.21 | 0.79 | 0.00 | 0.00 |
| Na2O tot. | 0.01 | 0.19 | 0.13 | 0.00 | 0.00 |

### Réalisation d'un clinker BCSAF :

### Préparation des matières premières :

Les matières premières sont préalablement broyées individuellement de façon à vérifier les caractéristiques suivantes :
- 0% de refus à 200µm
- 10% de refus maximum à 100µm.

### Pesées, mélanges et homogénéisation des matières premières :

Préparation du cru selon l'étape a) du procédé selon l'invention. Les pesées sont réalisées selon les proportions définies ci-après dans le tableau II et exprimées en % en masse par rapport à la masse totale du cru :

**Tableau II**

| % | Calcaire | Argile kaolinite | Bauxite | Anhydrite | Oxyde de fer |
|---|---|---|---|---|---|
| Cru BCSAF | 61.36 | 24.80 | 3.35 | 5.47 | 5.02 |

Le mélange de ces constituants est effectué après pesée des différents produits selon la séquence suivante :
- mélange manuel grossier en agitant le sac plastique contenant l'ensemble des constituants ;
- passage au tourne-jarre durant 4 h avec un mélange : 2Kg de matière + 2 Kg d'eau déminéralisée ;
- séchage à l'étuve pendant une nuit à 110°C ;
- introduction de 26,59g de Borax pour 1000g de cru obtenu à l'étape a) et homogénéisation par passage au mélangeur de type Eirich pendant 3 minutes.

### Granulation :

Après obtention du cru conforme à l'étape a) du procédé selon l'invention, celui-ci subit une opération de granulation afin d'obtenir des tailles de granules d'environ 1cm de diamètre.

### Cuisson :

Détail de la procédure suivie pour les cuissons de clinkers BCSAF :
- remplissage de 4 creusets avec 1kg de cru conforme à l'étape a) du procédé selon l'invention ;
- introduction des 4 creusets pleins (soit environ 4x250g de cru) dans le four, sans couvercle ;
- Montée en température selon une rampe de température n°1 : 1000°C/h jusqu'à 975°C ;
- palier à 975°C pendant 1H ;
- mise en place des couvercles sur les creusets ;
- rampe de température n°2 : 300°C/h jusqu'à 1350°C ;
- palier à 1350°C pendant 30 minutes puis les creusets sont vidés; les granules sont mis à refroidir à l'air.

Un clinker BCSAF est obtenu.

### Réalisation d'un ciment selon l'invention :

Un ciment selon l'invention est réalisé en mélangeant 26 ou 27 % de clinker obtenu précédemment, 60 ou 70% OPC, et 3 ou 4 % de sulfate de calcium, en % en masse par rapport à la masse totale du liant. Les proportions définies ci-après dans le tableau III ci-dessous indique les proportions des liants réalisés, exprimées en % en masse par rapport à la masse totale du liant.

**Tableau III**

| **Liants** | **OPC en %** | **BCSAF en %** | **CaSO₄ en %** |
|---|---|---|---|
| Liant 1 | 70 | 27 | 3 |
| Liant 2 | 60 | 26 | 4 |

### Réalisation d'un mortier selon l'invention :

Le mortier est été réalisé selon la norme EN 196-1.

Quantités de matières utilisées pour réaliser un mortier :
- 450 g de liant
- 1350 g de sable normalisé
- 225 g d'eau

Pour la préparation du liant, toutes les matières sont mélangées à l'aide d'un mélangeur Turbula pendant 30 minutes puis le protocole de gâchage respecte la norme EN196-1. Le mortier est ensuite coulé dans des moules aciers puis ces moules sont placés dans une armoire à hygrométrie contrôlée (> 97%). Après 1 jour d'hydratation du mortier, les prismes de mortier sont démoulés et immergés dans l'eau à 20 °C jusqu'à l'échéance de casse.

Les résistances mécaniques en compression mesurées à 28 jours selon la norme EN 196-1 sont indiquées dans le tableau ci-dessous.

| | Résistance mécanique en MPa mesurée à 28 jours pour un mortier normalisé |
|---|---|
| Liant 1 | 43 |
| Liant 2 | 39 |
| OPC 52,5 | 53 |
| OPC 42,5 | 45 |

## Revendications

1. Composition comprenant au moins en % exprimé en masse par rapport à la masse totale de composition
- de 10 à 85 % d'un clinker Portland ou ciment Portland; et
- de 90 à 15% d'un clinker Belite-Calcium-Sulphoalumineux-Ferrite (BCSAF) comprenant au moins en % exprimé en masse par rapport à la masse totale de clinker BCSAF
▪ de 5 à 30 %, de phase aluminoferrite calcique d'une composition correspondant à la formule générale C₂A_{X}F_{(1-X)}, avec X compris de 0,2 à 0,8 ;
▪ de 10 à 35 %, de phase sulfoaluminate de calcium « ye'elimite » C₄A₃$,
▪ de 40 à 75% de bélite (C₂S),
▪ de 0,01 à 10% d'une ou plusieurs phases mineures choisies parmi les sulfates de calcium, les sulfates alcalins, la perovskite, la géhlénite, la chaux libre et la périclase, et/ou une phase vitreuse,
et dont le total des pourcentages de ces phases est supérieur ou égal à 97%.

2. Composition selon la revendication 1 **caractérisée en ce que** les phases minéralogiques du clinker BCSAF comprennent en outre un ou plusieurs éléments secondaires choisis parmi le magnésium, le sodium, le potassium, le bore, le phosphore, le zinc, le manganèse, le titane, le fluor, le chlore.

3. Composition selon la revendication 1 **caractérisée en ce que** le clinker Belite-Calcium-Sulphoalumineux-Ferrite (BCSAF) comprend au moins en % exprimé en masse par rapport à la masse totale de clinker BCSAF dans la composition
• de 10 à 25 %, de phase aluminoferrite calcique d'une composition correspondant à la formule générale C₂A_{X}F_{(1-X)}, avec X compris de 0,2 à 0,8 ;
• de 15 à 30%, de phase sulfoaluminate de calcium « ye'elimite » C₄A₃$,
• de 45 à 70% de bélite (C₂S),
• de 0,01 à 10% d'une ou plusieurs phases mineures choisies parmi les sulfates de calcium, les sulfates alcalins, la perovskite, la géhlénite, la chaux libre et la périclase, et/ou une phase vitreuse,
et dont le total des pourcentages de ces phases est supérieur ou égal à 97%.

4. Composition selon la revendication 1 **caractérisée en ce qu'**elle comprend, en % exprimé en masse par rapport à la masse totale de clinker BCSAF dans la composition, les éléments secondaires suivants :
- de 0,2 à 1,5 % de sodium exprimé en oxyde de sodium,
- de 0,2 à 1,5 % de potassium exprimé en oxyde de potassium,
- de 0,2 à 2 % de bore exprimé en oxyde de bore,
- de 0 à 1% de fluorure plus chlorure, ou leur mélange, exprimé en fluorure de calcium et chlorure de calcium

5. Composition selon la revendication 1 **caractérisée en ce qu'**elle comprend, en % exprimé en masse par rapport à la masse totale de clinker BCSAF dans la composition, les éléments secondaires suivants :
- de 0,2 à 2 % de bore exprimé en oxyde de bore ;
- de 0,1 à 2 % de potassium exprimé en oxyde de potassium.

6. Composition selon la revendication 1 **caractérisée en ce qu'**elle comprend, en % exprimé en masse par rapport à la masse totale de clinker BCSAF dans la composition, les éléments secondaires suivants :
- de 0,2 à 2 % de potassium exprimé en oxyde de potassium;
- de 0,5 à 4 % de phosphore exprimé en oxyde de phosphore (P₂O₅).

7. Composition selon la revendication 1 **caractérisée en ce que** le clinker Belite-Calcium-Sulphoalumineux-Ferrite (BCSAF) ne comprend pas de phase minéralogique C₃S.

8. Procédé de fabrication d'une composition selon l'une des revendications 1 à 7 **caractérisé en ce qu'**il comprend une étape de mise en contact d'un clinker Portland ou d'un ciment Portland et d'un clinker BCSAF.

9. Ciment comprenant au moins
- une composition selon l'une des revendications 1 à 7; et
- de 1 à 40 % de sulfate de calcium, % en masse par rapport à la masse totale de ciment.

10. Ciment selon la revendication 9 comprenant en outre de 5 à 70 % d'additions minérales, % en masse par rapport à la masse totale de ciment.

11. Béton comprenant au moins un ciment selon l'une des revendications 9 ou 10.

12. Procédé de préparation d'un béton selon la revendication 11 comprenant une étape de mélange d'un ciment selon l'une des revendications 9 à 10 avec des granulats, de l'eau, éventuellement des additifs, et éventuellement des additions minérales.

13. Eléments pour le domaine de la construction réalisés en utilisant le béton selon la revendication 11 ou le ciment selon l'une des revendications 9 à 10.

## Patentansprüche

1. Zusammensetzung, mindestens umfassend in Gewicht bezogen auf das Gesamtgewicht der Zusammensetzung ausgedrückten %
- 10 bis 85% eines Portland-Klinkers oder Portland-Zements; und
- 90 bis 15% eines Belit-Calcium Sulfonaluminate-Ferrit-Klinkers (BCSAF), mindestens umfassend in Gewicht bezogen auf das Gesamtgewicht des BCSAF-Klinkers ausgedrückten %
• 5 bis 30% einer Calciumaluminoferrit-Phase einer Zusammensetzung entsprechend der allgemeinen Formel C₂AₓF₍₁₋ₓ₎, wobei X 0,2 bis 0,8 beträgt;
• 10 bis 35% einer Calciumsulfoaluminat-Phase "yee' limite" C₄A₃$,
• 40 bis 75% Belit (C₂S),
• 0,01 bis 10% einer oder mehrerer Nebenphasen, ausgewählt aus Calciumsulfaten, Alkalisulfaten, Perowskit, Gehlenit, freiem Kalk und Periklas und/oder einer Glasphase,
und wobei der Gesamtprozentsatz dieser Phasen größer oder gleich 97% ist.

2. Zusammensetzung nach Anspruch 1, **dadurch gekennzeichnet, dass** die mineralischen Phasen des BCSAF-Klinkers weiter ein oder mehrere sekundäre Elemente, ausgewählt aus Magnesium, Natrium, Kalium, Bor, Phosphor, Zink, Mangan, Titan, Fluor, Chlor umfassen.

3. Zusammensetzung nach Anspruch 1, **dadurch gekennzeichnet, dass** der Belit-Calcium Sulfonaluminate-Ferrit-Klinker (BCSAF) mindestens in Gewicht bezogen auf das Gesamtgewicht des BCSAF-Klinkers in der Zusammensetzung ausgedrückten % umfasst
• 10 bis 25% einer Calciumaluminoferrit-Phase einer Zusammensetzung entsprechend der allgemeinen Formel C₂AₓF₍₁₋ₓ₎, wobei X 0,2 bis 0,8 beträgt;
• 15 bis 30% einer Calciumsulfoaluminat-Phase "yee' limite" C₄A₃$,
• 45 bis 70% Belit (C₂S),
• 0,01 bis 10% einer oder mehrerer Nebenphasen, ausgewählt aus Calciumsulfaten, Alkalisulfaten, Perowskit, Gehlenit, freiem Kalk und Periklas und/oder einer Glasphase,
und wobei der Gesamtprozentsatz dieser Phasen größer oder gleich 97% ist.

4. Zusammensetzung nach Anspruch 1, **dadurch gekennzeichnet, dass** sie in Gewicht bezogen auf das Gesamtgewicht des BCSAF-Klinkers in der Zusammensetzung ausgedrückten % die folgenden sekundären Elemente umfasst:
- 0,2 bis 1,5% Natrium, ausgedrückt in Natriumoxid,
- 0,2 bis 1,5% Kalium, ausgedrückt in Kaliumoxid,
- 0,2 bis 2% Bor, ausgedrückt in Boroxid,
- 0 bis 1% Fluorid plus Chlorid, oder deren Mischung, ausgedrückt in Calciumfluorid und Calciumchlorid.

5. Zusammensetzung nach Anspruch 1, **dadurch gekennzeichnet, dass** sie in Gewicht bezogen auf das Gesamtgewicht des BCSAF-Klinkers in der Zusammensetzung ausgedrückten % die folgenden sekundären Elemente umfasst:
- 0,2 bis 2% Bor, ausgedrückt in Boroxid;
- 0,1 bis 2% Kalium, ausgedrückt in Kaliumoxid.

6. Zusammensetzung nach Anspruch 1, **dadurch gekennzeichnet, dass** sie in Gewicht bezogen auf das Gesamtgewicht des BCSAF-Klinkers in der Zusammensetzung ausgedrückten % die folgenden sekundären Elemente umfasst:
- 0,2 bis 2% Kalium, ausgedrückt in Kaliumoxid;
- 0,5 bis 4% Phosphor, ausgedrückt in Phosphoroxid (P₂O₅).

7. Zusammensetzung nach Anspruch 1, **dadurch gekennzeichnet, dass** der Belit-Calcium Sulfonaluminate-Ferrit-Klinker (BCSAF) keine mineralische Phase C₃S umfasst.

8. Verfahren zum Herstellen einer Zusammensetzung nach einem der Ansprüche 1 bis 7, **dadurch gekennzeichnet, dass** es einen Schritt des In-Kontakt-Bringens eines Portland-Klinkers oder eines Portland-Zements und eines BCSAF-Klinkers umfasst.

9. Zement, mindestens umfassend
- eine Zusammensetzung nach einem der Ansprüche 1 bis 7; und
- 1 bis 40% Calciumsulfat, % in Gewicht bezogen auf das Gesamtgewicht des Zements.

10. Zement nach Anspruch 9, weiter 5 bis 70% an mineralischen Zusätzen, % in Gewicht bezogen auf das Gesamtgewicht des Zements, umfassend.

11. Beton, mindestens einen Zement nach einem der Ansprüche 9 oder 10 umfassend.

12. Verfahren zum Zubereiten eines Betons nach Anspruch 11, einen Schritt des Mischens eines Zements nach einem der Ansprüche 9 bis 10 mit Granulaten, Wasser, eventuell Zugaben und eventuell mineralischen Zusätzen umfassend.

13. Elemente für den Bereich des Bauwesens, die unter Verwendung des Betons nach Anspruch 11 oder des Zements nach einem der Ansprüche 9 bis 10 realisiert werden.

## Claims

1. Composition comprising at least as a % expressed by weight in terms of the total weight of the composition
- from 10 to 85% of a Portland clinker or Portland cement; and
- from 90 to 15% of a belite-calcium-sulfoaluminous-ferrite (BCSAF) clinker comprising at least as a % expressed by weight in terms of the total weight of BCSAF clinker
• from 5 to 30%, of a calcium aluminoferrite phase of a composition corresponding to the general formula C₂AₓF₍₁₋ₓ₎, with X between 0.2 to 0.8;
• from 10 to 35%, of a calcium sulfoaluminate phase "ye'elimite" C₄A₃$,
• from 40 to 75% of belite (C₂S),
• from 0.01 to 10% of one or several minor phases chosen from calcium sulphates, alkali sulphates, perovskite, gehlenite, free lime and periclase, and/or a vitreous phase,
and of which the total of the percentages of these phases is greater than or equal to 97%.

2. Composition according to claim 1 **characterised in that** the mineralogical phases of the BCSAF clinker further comprise one or several secondary elements chosen from magnesium, sodium, potassium, boron, phosphorus, zinc, manganese, titanium, fluorine, chlorine.

3. Composition according to claim 1 **characterised in that** the Belite-Calcium-Sulfoaluminous-Ferrite (BCSAF) clinker comprises at least as a % expressed by weight in terms of the total weight of BCSAF clinker in the composition
• from 10 to 25%, of a calcium aluminoferrite phase of a composition corresponding to the general formula C₂AₓF₍₁₋ₓ₎, with X between 0.2 to 0.8;
• from 15 to 30%, of a calcium sulfoaluminate phase "ye'elimite" C₄A₃$,
• from 45 to 70% of belite (C₂S),
• from 0.01 to 10% of one or several minor phases chosen from calcium sulphates, alkali sulphates, perovskite, gehlenite, free lime and periclase, and/or a vitreous phase,
and of which the total of the percentages of these phases is greater than or equal to 97%.

4. Composition according to claim 1 **characterised in that** it comprises, as a % expressed by weight in terms of the total weight of BCSAF clinker in the composition, the following secondary elements:
- from 0.2 to 1.5% of sodium expressed as sodium oxide,
- from 0.2 to 1.5% of potassium expressed as potassium oxide,
- from 0.2 to 2% of boron expressed as boron oxide,
- from 0 to 1% of fluoride plus chloride, or mixtures thereof, expressed calcium fluoride and calcium chloride

5. Composition according to claim 1 **characterised in that** it comprises, as % expressed by weight in terms of the total weight of BCSAF clinker in the composition, the following secondary elements:
- from 0.2 to 2% of boron expressed as boron oxide;
- from 0.1 to 2% of potassium expressed as potassium oxide.

6. Composition according to claim 1 **characterised in that** it comprises, as % expressed by weight in terms of the total weight of BCSAF clinker in the composition, the following secondary elements:
- from 0.2 to 2% of potassium expressed as potassium oxide;
- from 0.5 to 4% of phosphorus expressed as phosphorus oxide (P₂O₅).

7. Composition according to claim 1 **characterised in that** the Belite-Calcium-Sulfoaluminous-Ferrite (BCSAF) clinker does not comprise a mineralogical phase C₃S.

8. Method for manufacturing a composition according to one of claims 1 to 7 **characterised in that** it comprises a step of putting a Portland clinker or a Portland cement in contact with a BCSAF clinker.

9. Cement comprising at least
- one composition according to one of claims 1 to 7; and
- from 1 to 40% calcium sulphate, % by weight in terms of the total weight of cement.

10. Cement according to claim 9 further comprising from 5 to 70% of alloying elements, % by weight in terms of the total weight of cement.

11. Concrete comprising at least one cement according to one of claims 9 or 10.

12. Method for preparing a concrete according to claim 11 comprising a step of mixing a cement according to one of claims 9 to 10 with granulates, water, possibly additives, and possibly alloying elements.

13. Elements for the field of construction carried out by using the concrete according to claim 11 or the cement according to one of claims 9 to 10.
